**Europäisches Patentamt**

**European Patent Office**

**Office européen des brevets**

(19)

(11) Veröffentlichungsnummer : **0 146 597**
**B1**

(12) EUROPÄISCHE PATENTSCHRIFT

(45) Veröffentlichungstag der Patentschrift :
27.05.87

(21) Anmeldenummer : 84902329.6

(22) Anmeldetag : 15.06.84

(86) Internationale Anmeldenummer :
PCT/CH 84/00097

(87) Internationale Veröffentlichungsnummer :
WO/8500161 (17.01.85 Gazette 85/02)

(51) Int. Cl.⁴ : **C 02 F   1/78**

(54) VORRICHTUNG ZUM OZONISIEREN EINES FLUIDS.

(30) Priorität : 20.06.83 CH 3352/83

(43) Veröffentlichungstag der Anmeldung :
03.07.85 Patentblatt 85/27

(45) Bekanntmachung des Hinweises auf die Patenterteilung : 27.05.87 Patentblatt 87/22

(84) Benannte Vertragsstaaten :
AT BE DE FR GB LU NL SE

(56) Entgegenhaltungen :
DE-A- 1 517 541
DE-A- 2 225 984
FR-A- 1 088 579
GB-A-     1 117
GB-A-   767 227
US-A- 4 141 830

(73) Patentinhaber : LAEDERACH- ZAUGG, Barbara
Kranichweg 30
CH-3074 Muri (CH)

(72) Erfinder : LAEDERACH- ZAUGG, Barbara
Kranichweg 30
CH-3074 Muri (CH)

(74) Vertreter : Feldmann, Clarence Paul
c/o Patentanwaltsbüro FELDMANN AG Postfach
Kanalstrasse 17
CH-8152 Glattbrugg (CH)

## Beschreibung

Die vorliegende Erfindung betrifft eine Vorrichtung gemäss dem Oberbegriff des Anspruchs 1.

Unter einem Fluid wird eine reine Flüssigkeit, ein Flüssigkeitsgemisch oder ein Mehrphasengemisch mit einer Flüssigkeit als kontinuierliche Phase (z. B. eine Suspension oder Emulsion) verstanden.

Ozon ist eines der stärksten Oxidationsmittel. Es wird insbesondere zur Aufbereitung von Trink-, Brauch- und Badewasser sowie in der Chemischen Industrie eingesetzt.

Es sind heute mehrere Ozonarzeugungsvorrichtungen bekannt, deren Grundaufbau weitgehend identisch ist. Sie weisen meist eine Gasaufbereitungseinheit in Form eines oder mehrer Trockner, einen Ozonator und ein Mischsystem zum Eintrag des Ozons in das Fluid auf. Die genannten Elemente sind meist räumlich getrennt und werden einzig durch ein Leitungssystem miteinander gekoppelt.

Derart ausgebildete Vorrichtungen gewährleisten wohl eine weitgehend betriebssichere Ozonerzeugung, garantieren jedoch keinen optimalen, d. h. möglichst vollständigen Eintrag des im Ozonator gebildeten Ozons aus der Gas- in die Fluidphase. Folgende Punkte können dafür verantwortlich gemacht werden :

Aufgrund der bekannten Zerfallsreaktion des Ozons zerfällt bereits ein Teil des gebildeten Ozons auf dem Transport vom Ozonator zum Gaseintragsorgan zu Sauerstoff, wenn die Zufuhrleitung lang ist.

Das vom Ozonator räumlich getrennte Gaseintragsorgan wird vielfach an einer baulich günstigen d. h. leicht zugänglichen Stelle in die Fluidleitung eingebaut. Damit ist jedoch nicht gewährleistet, dass in der Leitung eine für den Gas-Flüssig-Stoffaustausch günstige Zweiphasenströmungsform entsteht.

Die die Fluidströmung in der Leitung charakterisierenden Parameter (Strömungsgeschwindigkeit, Turbulenzintensität) gewährleisten vielfach keine für den Gas-Flüssig-Stoffaustausch optimale Zweiphasenströmungsform, da sie unter Berücksichtigung anderer Kriterien (z. B. minimaler Druckverlust, geräuscharme Strömung) ermittelt werden.

Die englische Patentschrift GB-A-1 117 aus dem Jahre 1910 zeigt beispielsweise eine Ozonisierungsvorrichtung, die keine Mittel zur Beeinflussung der im Zentralrohr fliessenden Zweiphasenströmung aufweist. Zur Anpassung der Vorrichtung an z. B. geänderte Flussigkeitsdurchsatzbedingungen müsste das gesamte Zentralrohr ausgetauscht werden. Da dieses Zentralrohr gleichzeitig als Innenelektrode des Ozonbildungsbereichs dient, müsste zusätzlich infolge der dadurch veränderten Entladungsspaltgeometrie entweder auch die Aussenelektrode oder die Hochspannungsversorgung ausgetauscht werden. Da im glatten Zentralrohr keine Mittel zur Optimierung des Ozoneintrages vorhanden sind, ist eine zusätzliche Misch- und Kontaktierungseinrichtung nachgeschaltet.

Zur Verbesserung des Ozoneintrages wird in der englischen Patentschrift GB-A-767 227 vorgeschlagen, Mischelemente in die das Zweiphasengemisch führenden Rohrleitung einzubauen. Die vorgeschlagenen Mischelemente bezwecken jedoch einzig eine Erhöhung der Turbulenz des Zweiphasengemisches. Sie können ihre Aufgabe jedoch nur dann erfüllen, wenn im Rohr bereits eine homogene Blasenströmung vorliegt. Beispielsweise wird eine Schicht- oder Pfropfströmung durch diese Mischelemente nur unwesentlich im Sinne einer Ozoneintragserhöhung beeinflusst. Ebensowenig nützen sie bei bereits hochturbulenter Strömung. Bei dieser Anlage müsste daher ein wesentlicher Anlageteil auf die jeweiligen Durchsatzbedingungen angepasst werden, was bei einer Aenderung der Durchsatzbedingung zu aufwendigen Umbauarbeiten führen würde. Nachteilig bei dieser Anlage ist zudem, dass der extern angeordnete Ozonator nicht durch das Zweiphasengemisch gekühlt wird.

In der deutschen Offenlegungsschrift DE-A-1 5-17 541 wird ein Verfahren beschrieben, bei dem das zu ozonisierende Wasser wohl den Ozonator kühlt, nicht jedoch die zu ozonisierende Luft zwecks Reduktion des Feuchtegehaltes derselben.

Das ozonhaltige Gas wird dem zu ozonisierenden Wasser durch eine Injektion zugeführt, danach aber nicht mehr zusätzlich in das Wasser dispergiert, sodass relativ viel ozonhaltiges Gas im nachgeschalteten Ausgleichbehälter in die Atmosphäre entweicht.

Der vorliegenden Erfindung liegt die Aufgabe zugrunde, eine Vorrichtung zum Ozonisieren eines Fluids vorzuschlagen, bei der das ozonhaltige Gas möglichst effektiv in das Fluid eingetragen wird. Sie soll insbesondere unabhängig von den Fluidanschlussleitungen bzw. den darin vorherrschenden Strömungsparametern einen möglichst hohen Ozoneintrag in das Fluid gewährleisten.

Diese Aufgabe wird mit den im kennzeichnenden Teil des Anspruchs 1 aufgeführten Merkmalen gelöst.

Die Anordnung des Gaseintragsorgans auf der Fluideintrittsseite des Ozonators bringt dabei folgende Vorteile :

Der Weg des ozonhaltigen Gases aus dem ersten Bereich des Ozonators (Ozonerzeugungsstelle) bis zum Gaseintragsorgan ist kurz. Die gesamte erzeugte Ozonmenge wirkt somit als Oxidationsmittel im Fluid.

Das im Gaseintragsorgan gebildete Zweiphasengemisch aus ozonhaltigem Gas und Fluid strömt aus dem Gaseintragsorgan in den zweiten Bereich des Ozonators ein. Innerhalb des zweiten Bereiches des Ozonators ist es dank den auswechselbaren Einsatzstücke kontrollierten Strömungsverhältnissen ausgesetzt. Aufgrund der bekannten engen Relationen zwischen Strömung und Stoffaustausch in Zweiphasengemischen ist dadurch auch der Stoffaustausch (Ozoneintrag in das Fluid) kontrolliert.

Innerhalb des Ozonators lassen sich die Zweiphasenströmungsparameter durch die Dimensionierung der im zweiten Bereich angeordneten, auswechselbaren Einsatzstücke in weiten Grenzen variieren, ohne dabei im Zu- und Abführsystem Aenderungen vornehmen zu müssen.

Ozonator und Gaseintragsorgan bilden eine bauliche Einheit, die ohne grossen Aufwand auch in bereits bestehende Leitungssysteme integriert werden kann.

Die im ersten Bereich des Ozonators anfallende Reaktionswärme wird direkt durch das Fluid abgeführt. Aufwendige und teure zusätzliche Kühleinrichtungen entfallen somit.

Bei einer Ausführungsform wird vorgeschlagen, im Fluidströmungskanal des Ozonators Mittel zur Redispergierung des im Gaseintragsorgan gebildeten Zweiphasengemisches anzuordnen. Diese Massnahme empfielt sich insbesondere dann, wenn das Zweiphasengemisch eine nicht vernachlässigbare Koaleszenzneigung zeigt. Als Mittel können z. B. statische Mischelemente, Lochbleche oder Drahtgeflechtspackungen dienen. Es ist aber auch möglich, dynamisch arbeitende Mittel wie Propeller oder Vibromischer einzusetzen.

Bei einer weiteren Ausführungsform wird vorgeschlagen, unmittelbar am Fluidaustritt des Ozonators ein Phasentrennelement, z. B. einen Zyklon, einen Rohrkrümmer oder einen Abscheidekessel anzuordnen. Diese Massnahme ergibt eine kompakte Vorrichtung, die das Fluidleitungssystem nicht mit Gas belastet, was insbesondere bei nachgeschalteten Zentrifugalpumpen von Vorteil ist. Es ist aber auch möglich, zwischen dem Ozonator und dem Phasentrennalement ein mit oder ohne zusätzlichen Dispergiermitteln ausgerüstetes Zwischenstück anzuordnen.

Damit verhindert wird, dass im ersten Bereich des Ozonators aus dem zu ozonisierenden Gas Wasser auskondensiert, wird bei einer weiteren Ausführungsform vorgeschlagen, das einzuleitende Gas durch das Fluid in einem Wärmeaustauscher zu kühlen. Damit wird eine Kondensatbildung in den Wärmeaustauscher verlagert.

Falls aus ozonbildungstechnischen Gründen eine weitergehende Gastrocknung erwünscht ist, kann das derart vorbehandelte Gas in einem dem Wärmeaustauscher nachgeschalteten Trockner, z. B. in einem mit Silikagel gefüllten Säulentrockner oder an einer gekühlten Oberfläche (z. B. Peltier-Element) nachgetrocknet werden.

Das so aufbereitete Gas wird anschliessend vorzugsweise über ein Durchsatzüberwachungsgerät und einen Feuchtemesser in den ersten Bereich des Ozonators eingetragen.

Als Gaseintragsorgan wird zweckmässig ein in Form einer Venturidüse ausgebildeter Mischer eingesetzt. Derartige Elemente sind bekannt. Aufgrund des in der Venturidüse durch das strömende Fluid erzeugten Unterdrucks wird das zu ozonisierende Gas ohne zusätzliche Förderelemente durch Trockner und Ozonator gesaugt.

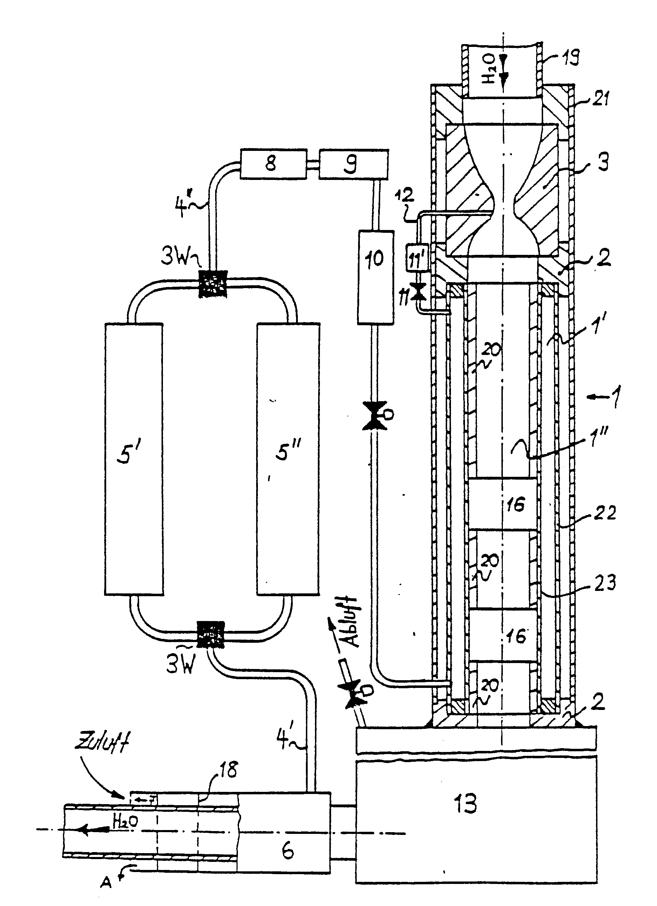

Im folgenden wird anhand der Figur eine Ausführungsform der Vorrichtung näher erläutert.

Der Ozonator 1 weist einen vom Fluid durchströmbaren, durch ein Rohr 23 gebildeten Strömungskanal 1″ auf. Auf der Fluideintrittsseite des Rohres 23 ist ein venturidüsenähnliches Gaseintragsorgan 3 angeordnet. Auf der Fluidaustrittsseite ist dieses Rohr 23 mit einem als Zyklon ausgebildeten Phasentrennelement 13 verbunden.

Zweckmässigerweise sind die Rohre 22 und 23 sowie das Gaseintragsorgan bzw. Phasentrennelement über Kupplungs- und/oder Zwischenstücke 2 miteinander verbunden.

Im Strömungskanal 1″ sind zwei statische Mischelemente 16 angeordnet. Mittels der in Form von Hülsen ausgebildeten Einsatzstücken 20 ist der Durchflussquerschnitt hinsichtlich günstiger Strömungsverhältnisse im zweiten Bereich 1″ einstellbar. Diese Hülsen 20 dienen zugleich als Stützelemente für die statischen Mischelemente und sind als Auswechselteile konzipiert. Das rohrförmige Aussengehäuse 21 dient als Berührungsschutz und erhöht zugleich die mechanische Festigkeit der Kombination Gaseintragsorgan-Ozonator. Um die Figur nicht unnötig zu belasten, sind die Stromzuführungen zum ersten Bereich 1′ des Ozonators weggelassen.

Das zu ozonisierende Gas, hier Luft, wird durch den in der Venturidüse 3 erzeugten Unterdruck aus der Umgebung über ein Staubfilter 7 in den Wärmeaustauscher 6 gesaugt. Der Wärmeaustauscher ist als Doppelrohraustauscher konzipiert, wobei im Zentralrohr das ozonisierte Fluid fliesst und dabei die im Ringspalt einströmende Luft kühlt. Damit auch das Aussenrohr als Kühlfläche dient, ist dieses über Stützbleche 18 mit dem Innenrohr verbunden. Während der Kühlung kondensiert Wasserdampf aus der Luft bis zu dem der Fluidtemperatur entsprechenden Taupunkt aus. Das Kondensat fliesst anschliessend in Pfeilrichtung A aus dem Wärmeaustauscher aus.

Die so vorgetrocknete Luft strömt über die Leitung 4′ und ein Umschaltventil 3 W in eine der zwei silikagelgefüllten Trocknersäulen 5′ bzw. 5″.

Diese Trocknersäulen werden im Gegentakt regeneriert. Somit kann eine ständige Ozonproduktion gewährleistet werden. Es ist aber auch möglich, nur eine Trocknersäule zu verwenden, wobei während deren Regeneration die Ozonproduktion unterbrochen ist.

Die getrocknete Luft fliesst anschliessend durch ein zweites Ventil 3W und durch die Leitung 4″ über einen Feuchtemesser 8, eine Druckmessstation 9 und einen Strömungswächter 10 (z.B. in Form eines Rotameters) unten in den ersten Bereich 1′ des Ozonators ein. Im ersten Bereich 1′ des Ozonators wird der Luftsauerstoff mittels elektrischer Funkenentladung ozonisiert. Das so gebildete ozonhaltige Gas wird über eine Verbindungsleitung 12 von der Venturidüse angesaugt. In der Leitung 12 ist ein Absperrventil 11 angeordnet, das mittels der Signale vom Feuchtemesser 8, der Druckmessstation 9 und dem Strömungswächter 10 beim Ueberschreiten der zulässigen Werte betätigt wird. Diese Massnahme verhindert ein Einströmen des Fluids in den ersten Bereich 1'. Anstelle oder zusätzlich zum Ventil 11 kann auch ein Einwegventil 11' eingesetzt werden. Eine derartige Vorrichtung zum Ozonisieren kann ohne grossen Aufwand in bereits bestehende Fluidleitungen eingebaut werden.

Zur Erzielung von Fluidströmungsparametern, die eine optimale Ozoneintragung in das Fluid gewährleisten, werden in den Fluidströmungskanal 1'' geeignete Hülsen 20 und gegebenenfalls zusätzlich Redispergierungsorgane 16 eingesetzt.

## Patentansprüche

1. Vorrichtung zum Ozonieren eines Fluids, mit einem Ozonator (1), der einen ersten Bereich (1') aufweist, in dem aus einem sauerstoffhaltigen Gas Ozon gewinnbar ist, und einen zweiten Bereich aufweist, der als Strömungskanal (1'') für das Fluid ausgebildet ist, wobei der erste Bereich über mindestens eine Verbindungsleitung (12) zu einem Gaseintragsorgan (3) zum Eindispergieren des ozonhaltigen Gases in das Fluid führt, welches in Strömungsrichtung des Fluids betrachtet vor dem Ozonator (1) liegt, dadurch gekennzeichnet, dass im Strömungskanal (1'') mindestens ein den Fluiddurchtrittsquerschnitt veränderndes, rohrförmiges Einsatzstück (20) auswechselbar angeordnet ist, das sich im wesentlichen über die gesamte Länge des Strömungskanals erstreckt und mit seiner Aussenwandung an der Innenwand des Strömungskanals anliegt.

2. Vorrichtung nach Anspruch 1, dadurch gekennzeichnet, dass das rohrförmige Einsatzstück (20) mindestens zweigeteilt ist, wobei die einander gegenüberliegenden Stirnflächen der Einsatzstückabschnitte (20) als Stützflächen für ein oder mehrere zwischengefügte Redispergierungsorgane (16) dienen.

3. Vorrichtung nach Anspruch 1 oder 2, dadurch gekennzeichnet, dass auf der dem Eintragsorgan (3) gegenüberliegenden Seite des Ozonators ein Phasentrennelement (13) angeordnet ist.

4. Vorrichtung nach einem der Ansprüche 1 bis 3, dadurch gekennzeichnet, dass sie einen Wärmeaustauscher (6) aufweist, der zur Kühlung des zu ozonisierenden Gases dient, wobei als Kühlmittel das zu ozonisierende Fluid durch diesen Wärmeaustauscher leitbar ist.

5. Vorrichtung nach Anspruch 1, dadurch gekennzeichnet, dass der Ozonator (1) aus konzentrischen Rohren (22, 23) aufgebaut ist, wobei das innere Rohr (23) den Strömungskanal (1'') für das zu ozonisierende Fluid bildet, während der ringspaltförmige Raum zwischen dem inneren Rohr (23) und dem äusseren Rohr (22) den ersten Bereich (1') bildet, in welchem durch elektrische Entladung ozonhaltiges Gas gebildet wird, das über die Verbindungsleitung (12) zu dem in Strömungsrichtung des Fluids vor dem Ozonator angeordneten, als Venturirohr ausgebildeten Gaseintragungsorgan (3) führt.

## Claims

1. A device for ozonising a fluid having an ozoniser (1) comprising a first region (1') in which ozone can be extracted from an oxygen-containing gas, and a second region formed as a flow channel (1'') for the fluid, the first region leading via at least one connecting line (12) to a gas inlet element (3) for dispersing the ozoniferous gas into the fluid, the gas inlet element being located upstream of the ozoniser, characterised in that at least one tubular insertion piece (20) is removably arranged in the flow channel (1'') for altering the fluid cross-section through the flow channel, the tubular insertion piece extending substantially over the entire length of the flow channel and abutting against the inner wall of the flow channel with its outer wall.

2. A device according to claim 1, characterised in that the tubular insertion piece (20) is divided into at least two parts, the adjacent end faces of the insertion piece parts (20) being used as support faces for one or more redispersing elements (16) inserted therebetween.

3. A device according to claim 1 or 2, characterised in that a phase separation element (13) is disposed on the side of the ozoniser adjacent the inlet element (3).

4. A device according to any one of claims 1 to 3, characterised in that the device comprises a heat exchanger (6), which is used to cool the gas to be ozonised, the fluid to be ozonised being used as a coolant so as to be ductile through the heat exchanger.

5. A device according to claim 1, characterised in that the ozoniser (1) is constructed from concentric tubes (22, 23), the inner tube (23) forming the flow channel (1'') for the fluid to be ozonised, the annular space between the inner tube (23) and the outer tube (22) forming the first region in which the ozoniferous gas is formed by means of electrical discharge, the first region leading via the connecting line (12) to the gas inlet element (3) formed as a Venturi tube arranged upstream of the ozoniser.

## Revendications

1. Dispositif pour l'ozonisation d'un fluide, comportant un ozoniseur (1) qui présente une première région (1') dans laquelle on peut obtenir de l'ozone en partant d'un gaz contenant de l'oxygène et présente une deuxième région qui est conçue sous forme de canal d'écoulement (1'') pour le fluide, la première région conduisant, par l'intermédiaire d'au moins un tuyau de liaison (12), à un organe d'introduction de gaz (3) pour la dispersion du gaz contenant de l'ozone dans le fluide, organe qui, considéré dans le sens d'écoulement du fluide, se trouve avant l'ozoniseur (1), caractérisé en ce que dans le canal d'écoulement (1") est disposée de façon interchangeable au moins une pièce d'insertion tubulaire (20) modifiant la section de passage de fluide, qui s'étend pratiquement sur toute la longueur du canal d'écoulement et s'applique par sa paroi extérieure contre la paroi intérieure du canal d'écoulement.

2. Dispositif selon la revendication 1, caractérisé en ce que la pièce d'insertion tubulaire (20) est au moins divisée en deux, les surfaces frontales opposées entre elles des tronçons de pièce d'insertion (20) servant de surfaces d'appui pour un ou plusieurs organes de redispersion (16) interposés.

3. Dispositif selon l'une des revendications 1 et 2, caractérisé en ce que sur le côté de l'ozoniseur qui est opposé à l'organe d'introduction (3) est disposé un élément séparateur de phases (13).

4. Dispositif selon l'une des revendications 1 à 3, caractérisé en ce qu'il présente un échangeur de chaleur (6) qui sert au refroidissement du gaz à ozoniser, le fluide à ozoniser pouvant être conduit à travers cet échangeur de chaleur.

5. Dispositif selon la revendication 1, caractérisé en ce que l'ozoniseur est constitué par des tubes concentriques (22, 23), le tube intérieur (23) formant le canal d'écoulement (1") pour le fluide à ozoniser, tandis que l'espacement en forme d'interstice annulaire entre le tube intérieur (23) et le tube extérieur (22) forme la première région (1') dans laquelle, par décharge électrique, on forme du gaz contenant de l'ozone, qui conduit, en passant par le tuyau de liaison (12), à l'organe d'introduction de gaz (3) conçu sous forme de tube de Venturi, disposé avant l'ozoniseur dans le sens d'écoulement du fluide.